Europäisches Patentamt

**European Patent Office**

Office européen des brevets

(19)

(11) Veröffentlichungsnummer: **0 009 137**
**B1**

(12) **EUROPÄISCHE PATENTSCHRIFT**

(45) Veröffentlichungstag der Patentschrift :
09.06.82

(51) Int. Cl.³ : **F 28 G   1/12**

(21) Anmeldenummer : **79103137.0**

(22) Anmeldetag : **25.08.79**

(54) **Vorrichtung zum Abscheiden von abgeriebenen Reinigungskörpern.**

(30) Priorität : 23.09.78 DE 7828404 U
23.09.78 DE 7828382 U

(73) Patentinhaber : **Koller, Josef**
**Ziegeleiweg 26**
**D-4006 Erkrath 2 (DE)**

(43) Veröffentlichungstag der Anmeldung :
02.04.80 (Patentblatt 80/07)

(72) Erfinder : **Koller, Josef**
**Ziegeleiweg 26**
**D-4006 Erkrath 2 (DE)**

(45) Bekanntmachung des Hinweises auf die Patenterteilung : 09.06.82 Patentblatt 82/23

(74) Vertreter : **Stratmann, Ernst, Dr.-Ing. et al**
**Schadowplatz 9**
**D-4000 Düsseldorf 1 (DE)**

(84) Benannte Vertragsstaaten :
**DE FR GB IT NL**

(56) Entgegenhaltungen :
DE - B - 2 254 677
US - A - 1 795 348

« Brennstoff, Wärme, Kraft »
Band 10, 1958, S. 123

EP 0 009 137 B1

Vorrichtung zum Abscheiden von abgeriebenen Reinigungskörpern

Die Erfindung betrifft eine Vorrichtung zum Abscheiden von abgeriebenen und Einbringen von neuen Reinigungskörpern, die aus elastisch verformbarem Material wie Gummi oder Kunststoff bestehen und im Kühlfluidkreislauf eines Wärmetauschers mitgeführt werden, mit einer mit dem Kreislauf verbundenen Abzweig- und Sortiervorrichtung für Reinigungskörper mit bestimmter Durchmessergrenze.

Eine derartige Vorrichtung ist bereits aus der DE-B-22 54 677 bekannt.

Die meist von Schwammgummikugeln gebildeten Reinigungskörper werden im Kühlfluidkreislauf, meist Kühlwasserkreislauf, mitgeführt und dienen zum Reinigen der Wärmetauscherrohre. Um eine Reinigungswirkung zu erzielen, müssen die Reinigungskörper größer als das zu reinigende Rohr sein. Da die Reinigungskörper verschleißen, müssen die abgeriebenen regelmäßig aussortiert und durch neue ersetzt werden.

Dies gelingt auch mit der bekannten Vorrichtung, jedoch hat die bekannte Vorrichtung noch den Nachteil, daß es nur in sehr umständlicher Weise möglich ist, die Durchmessergrenze von auszusortierenden Reinigungskörpern zu ändern. Da sich beim Stand der Technik die aus dem Sortierkorb 10 mit Löchern 19 eines Durchmessers 20 bestehende Sortiereinrichtung innerhalb des Kühlkreislaufs befindet, ist es nicht möglich, ohne Unterbrechung des Kühlkreislaufs die Einstellung der Durchmessergrenze zu ändern. Vielmehr muß die Anlage demontiert werden, damit der Sortierkorb 10 durch einen anderen Sortierkorb mit Löchern 19 anderen Lochdurchmessers 20 ersetzt werden kann.

Dies ist bei bestimmten Anwendungsfällen von erheblichem Nachteil, so beispielsweise bei Kernkraftwerken, bei denen der Kühlmittelkreislauf u.U. radioaktiv verseucht ist und daher nicht so ohne weiteres zum Zwecke des Austauschs des Sortierkorbs 10 zugänglich ist, ganz abgesehen davon, daß bei Kernkraftwerken eine Abschaltung des Kühlkreislaufs nur nach Zurückfahren der Gesamtanlage zulässig ist und daher mit ganz erheblichen Kosten verbunden ist.

Es fehlt auch an Maßnahmen, um sicherzustellen, daß tatsächlich alle abgeriebenen Reinigungskörper ausgeschieden werden, da jeweils nur ein Teil der Reinigungskörper von der bekannten Vorrichtung abgeschieden wird. Es ist nicht auszuschließen, daß unter bestimmten Betriebsbedingungen ein zu großer Anteil von abgeriebenen Reinigungskörpern im Flüssigkeitsstrom verbleibt und möglicherweise zu Betriebsstörungen führt, was wiederum bei bestimmten Anwendungen, wie Kernkraftwerken, außerordentlich nachteilig wäre.

Da bei bestimmten Anwendungsfällen, wie insbesondere Kernkraftwerken, ein automatisierter Betrieb anzustreben ist, sollte eine Abscheidungsvorrichtung auch so ausgestaltet werden können, daß für jeden ausgeschiedenen Reinigungskörper ein neuer Reinigungskörper automatisch zuführbar ist, was beim Stand der Technik nicht möglich zu sein scheint.

Aufgabe der Erfindung ist es, eine Vorrichtung der eingangs genannten Art dahingehend zu verbessern, daß ohne Unterbrechung des Kühlmittelkreislaufs bei Bedarf die Durchmessergrenze der auszusortierenden Reinigungskörper geändert werden kann, was beispielsweise dann notwendig wäre, wenn Reinigungskörper anderen Materials (z.B. anderen spezifischen Gewichts oder anderer Elastizität) verwendet werden sollen.

Außerdem soll die Vorrichtung sicherstellen, daß auch tatsächlich sämtliche im Kühlkreislauf befindliche Reinigungskörper erfaßt werden.

Die Vorrichtung sollte auch dahingehend erweiterbar sein, daß ausgeschiedene Reinigungskörper automatisch und kontinuierlich durch neue Reinigungskörper ersetzbar sind.

Gelöst wird die Aufgabe dadurch, daß gemäß dem Kennzeichenteil des Hauptanspruchs die Sortiervorrichtung außerhalb des Kühlfluidkreislaufes angeordnet ist und aus einem von der Abzweigvorrichtung über eine Zweigleitung die Reinigungskörper aufnehmenden Dosierbehälter und einer darunter angeordneten Sortiereinrichtung besteht, welche eine im Querschnitt sich nach unten hin verjüngende Trogform hat (z.B. V-, Trapez- oder Halbkreisform), mittels Vibrator als Linearförderer ausgebildet ist und am Ende zwei mit Abstand angeordnete Meßschienen aufweist, die parallel (Fig. 3), in abgestufter Form parallel (Fig. 4) oder divergierend (Fig. 5) zueinander ausgerichtet sind, und daß eine aussortierte Reinigungskörper erfassende Zähleinrichtung der Sortiereinrichtung nachgeschaltet ist.

Durch diese Merkmale, insbesondere durch das Merkmal der außerhalb des Fluidstroms angeordneten Sortiervorrichtung, wird es möglich, ohne Unterbrechung des Fluidstroms den Sortiervorgang in gewünschter Weise zu ändern, wenn dies notwendig ist. Außerdem wird erreicht, daß nicht nur ein bestimmter Teil der Reinigungskörper erfaßt wird, sondern stets die im gesamten Kühlkreislauf vorhandenen Reinigungskörper, so daß es nicht vorkommen kann, daß bei extremen Betriebsbedingungen bestimmte abgeriebene Reinigungskörper doch in ungewünschter Weise im Kühlkreislauf verbleiben.

Neben den genannten Vorteilen hat die erfindungsgemäße Einrichtung noch die weiteren Vorteile, daß sie zum einen besonders einfach aufzubauen ist und gleichzeitig eine Sichtkontrolle des Sortiervorganges ermöglicht, daß sie aber andererseits auch zur Eingabe von an sich neuen Reinigungskörpern verwendet werden kann, die aber aufgrund beispielsweise des Herstellungsverfahrens entweder keinen gleichförmigen Kugeldurchmesser aufweisen oder sogar nicht kugelförmig, sondern beispielsweise zigarrenförmig sind.

Zweckmäßige Ausgestaltungen sind in den Unteransprüchen enthalten. Damit z.B. der Linearförderer der Sortiervorrichtung nicht durch übermäßige Zufuhr von Reinigungskörpern blockiert wird, kann gemäß der Weiterbildung von Anspruch 2 der Boden des Dosierbehälters aus einer oder mehreren am unteren Behälterrand angelenkten Klappen bestehen, die durch Antriebseinrichtungen aus der Horizontalen nach unten in den Trog hinein verschwenkbar sind. Erfolgt dieses Verschwenken, werden Reinigungskörper nach unten in die Linearförderrinne in einer solchen Menge abgegeben, daß diese gerade sich füllt. Beim anschließenden Schließen der Klappen bekommt der Vorrat im Förderer soviel Luft, daß eine Blockierung nicht auftreten kann.

Der Antrieb der Klappen kann vorzugsweise mittels eines Exzenters erfolgen, wobei es günstig ist, gemäß Anspruch 3 zwischen diesem Antrieb und der Klappe ein elastisches Verbindungselement, insbesondere eine Schraubenfeder, vorzusehen, die einen Längenausgleich zuläßt und verhindert, daß zwischen den Klappen verklemmte Reinigungskörper durch den Schließvorgang zu stark beansprucht werden.

Wie dem Anspruch 4 zu entnehmen ist, kann mit Hilfe der Zähleinrichtung, die insbesondere mittels einer Lichtschranke arbeiten kann, festgestellt werden, wieviel abgeriebene Reinigungskörper ausgeschieden werden bzw. wieviel noch gute Reinigungskörper nachbleiben.

Mit Hilfe von von einer derartigen Lichtschranke gelieferten Impulsen könnte auch die Zufuhr von neuen Reinigungskörpern in die Einbringvorrichtung gesteuert werden, so daß beispielsweise für jeden ausgeschiedenen Reinigungskörper ein neuer Reinigungskörper entweder in den Dosierbehälter der Sortiervorrichtung oder, wenn ein bestimmter Durchmesser für diese neuen Reinigungskörper gesichert ist, in die Einbringvorrichtung gegeben werden.

Diese Einbringvorrichtung sorgt nicht nur für das korrekte Zurückführen der Reinigungskörper in den Kühlmittelstrom. Um eine gleiche Reinigungswirkung bei allen Rohren des Wärmetauschers zu erreichen, müssen sich die Reinigungskörper statistisch gleichmäßig im Fluid verteilen. Dieses geschieht nur, wenn das spezifische Gewicht der Reinigungskörper annähernd dem des Fluids entspricht. Da die Reinigungskörper naturgemäß durch die beim Aussortieren eingedrungene Luft aufschwimmen würden, müssen sie beim Zurückgeben in das Fluid wieder annähernd luftleer gemacht werden.

Dies geschah bisher durch mehrmaliges manuelles Ausdrücken der Reinigungskörper im Fluid, bis alle Luft entwichen war und die Poren sich wieder mit Reinigungsfluid vollgesogen hatten. Dieses manuelle Verfahren ist naturgemäß für den hier angestrebten automatischen Betrieb nicht anwendbar. Ähnliches gilt für ein Verfahren, bei dem Schwammgummikugeln in einen Behälter gebracht und dieser dann luftleer gemacht wird, wobei durch das Vakuum im Behälter die Luft aus den Schwammgummikugeln entweicht, weil dieses Verfahren zum einen zu kompliziert ist, zum anderen wiederum keinen kontinuierlichen Betrieb erlaubt, sondern stets nur Chargenbetrieb.

Um den erfindungsgemäß angestrebten kontinuierlichen Betrieb mit insbesondere Einzelzugabe von Reinigungskörpern auf möglichst einfache Weise zu erreichen, wird gemäß einer in Anspruch 5 angeführten vorteilhaften Weiterbildung die Sortiervorrichtung mit einer im Kreislauf eingeschalteten, über eine Leitung mit einer Einbringvorrichtung für die Reinigungskörper in Verbindung gebracht, die eine Anordnung zum Herauspressen der eingeschleusten Luft aus den porösen elastischen Reinigungskörpern besitzt, welche aus einem die Reinigungskörper aufnehmenden Behälter und aus einem oder mehreren darunter angeordneten Paar Walzen besteht. Eine besonders große Auspreßwirkung (siehe Anspruch 6) wird erreicht, wenn die Walzen eines jeden Paares gegenläufig rotierend angetrieben sind.

Es ist auch günstig, einen Vorratsbehälter für neue Reinigungskörper vorzusehen, der unter Steuerung der Zähleinrichtung für ausgeschiedene Reinigungskörper neue Reinigungskörper der Einbringvorrichtung zuführt, siehe Anspruch 7.

Gemäß Anspruch 8 können Abzweigvorrichtung und Einbringvorrichtung als einen fortlaufenden Betrieb zulassende, druckdichte Schleusen ausgebildet sein.

Die Erfindung wird nachfolgend anhand von Ausführungsbeispielen näher erläutert, die in den Zeichnungen dargestellt sind.

Es zeigt:

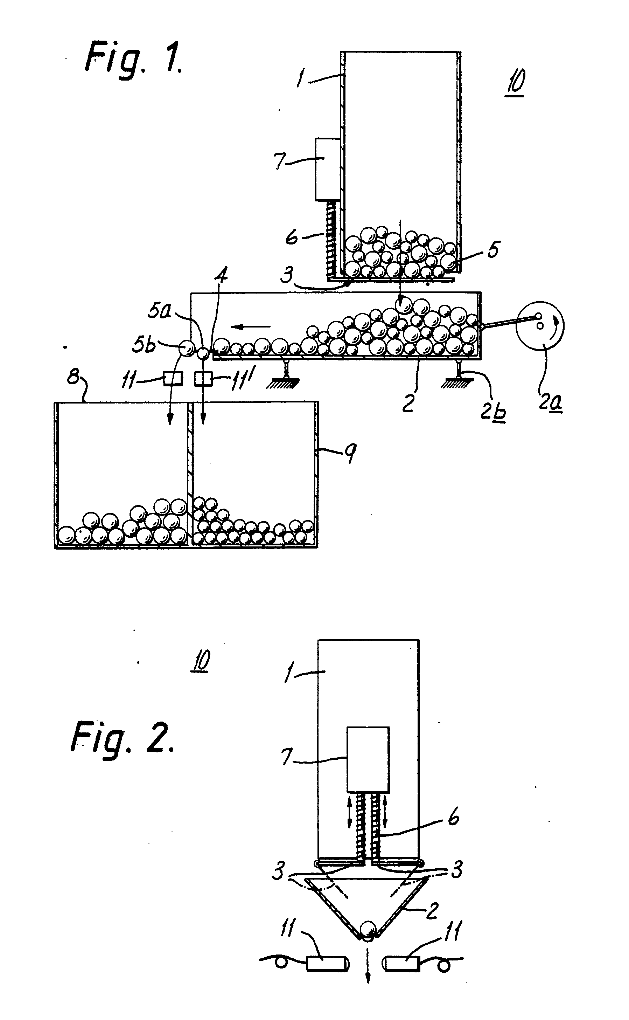

Figur 1 eine schematische Schnittansicht durch die Sortiervorrichtung der erfindungsgemäßen Vorrichtung zum Abscheiden von abgeriebenen Reinigungskörpern;

Figur 2 eine Seitenansicht auf die Sortiervorrichtung der Fig. 1, wobei diese in V-Form ausgebildet ist;

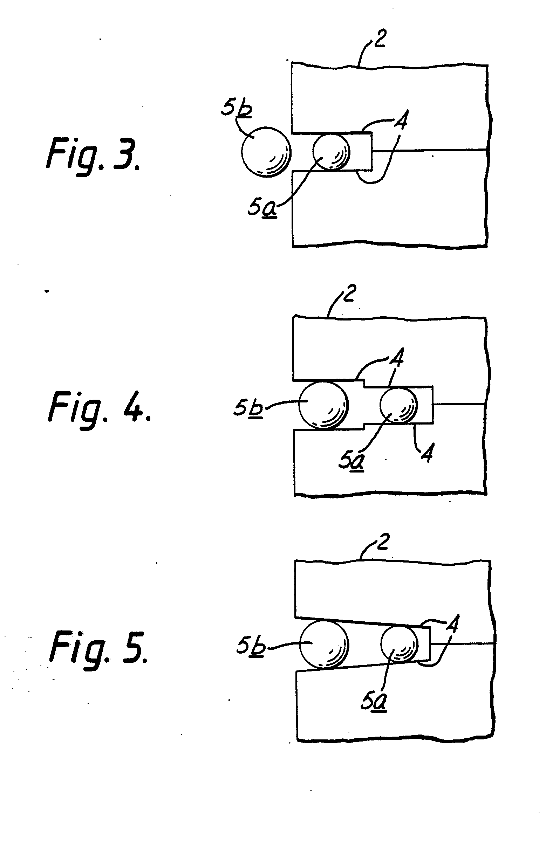

Figur 3 eine Draufsicht auf eine parallele Meßschienenanordnung am Ende der Sortiereinrichtung;

Figur 4 eine Draufsicht ähnlich der Fig. 3 auf eine Meßschienenanordnung, jedoch mit abgestuften parallelen Meßschienenstücken;

Figur 5 eine Draufsicht ähnlich der Fig. 3, jedoch auf divergierend zueinander angeordnete Meßschienen;

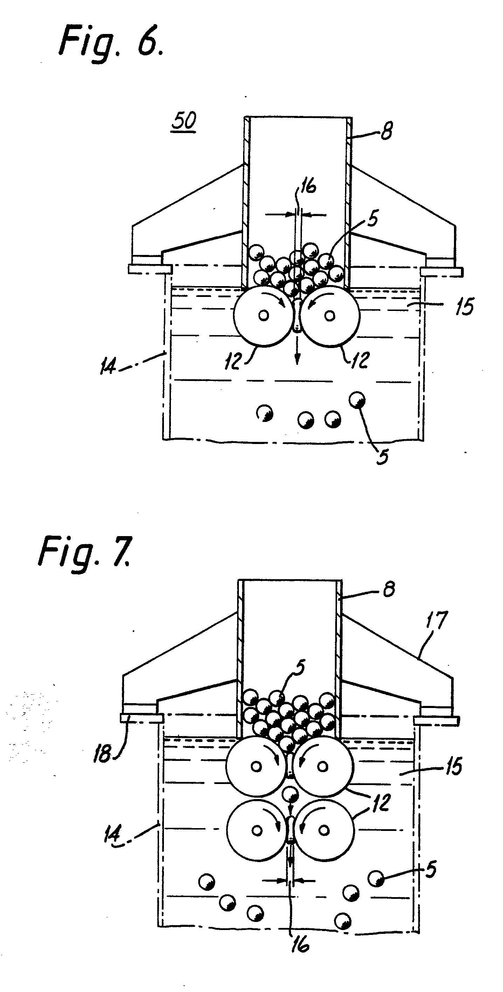

Figur 6 eine schematische Schnittansicht durch die Einbringvorrichtung für Reinigungskörper mit einem Walzenpaar;

Figur 7 eine ähnliche Vorrichtung wie Fig. 6, jedoch mit zwei Walzenpaaren;

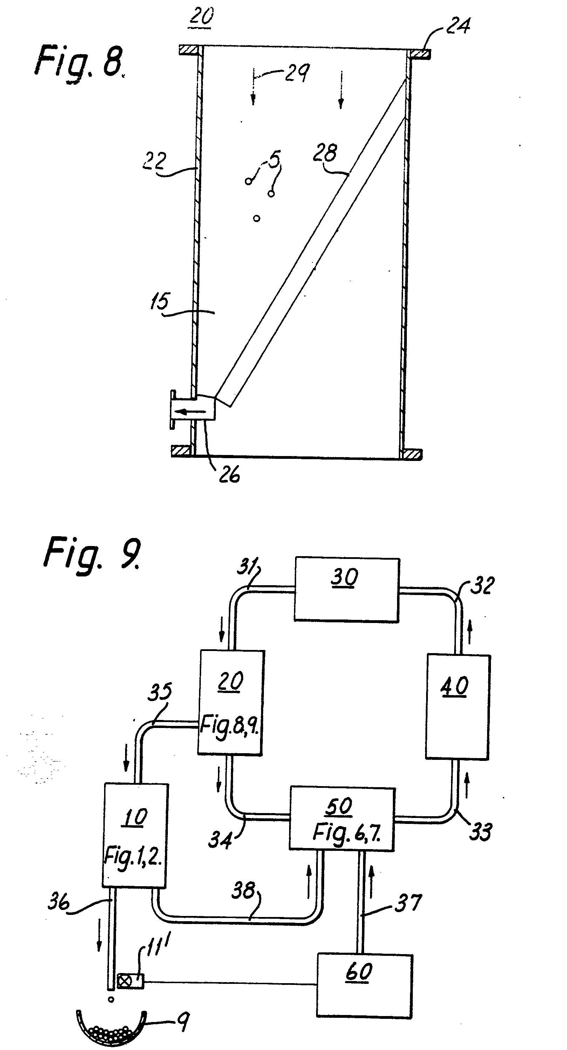

Figur 8 eine schematische Schnittansicht von einer Abzweigvorrichtung für Reinigungskörper und

Figur 9 eine diagrammartige Darstellung eines die erfindungsgemäße Vorrichtung zum Abscheiden von abgeriebenen Reinigungskörpern aufweisenden Kühlmittelkreislaufs.

Fig. 1 zeigt in schematischer Schnittansicht die Sortiervorrichtung 10 der erfindungsgemäßen Vorrichtung zum Abscheiden von abgeriebenen Reinigungskörpern. Die Sortiervorrichtung 10 besteht aus einem die Reinigungskörper aufnehmenden Dosierbehälter 1 und einem in V-Form hier dargestellten Linearförderer 2, der mit Hilfe z.B. eines von einem nicht dargestellten Motor angetriebenen Exzenters 2a in Schwingbewegung gebracht wird. Der Linearförderer 2 kann auf Gummipuffern oder anderen eine Linearbewegung zulassenden Stützeinrichtungen 2b gelagert sein. Statt der V-Form, wie sie insbesondere in Fig. 2 deutlich zu erkennen ist, sind auch andere Formen denkbar, die eine Verjüngung nach unten hin ergeben, z.B. Trapezform oder Halbkreisform. Am Ausflußende des Linearförderers 2 sind zwei Meßschienen 4 angeordnet, die in den Fig. 3 bis 5 in größeren Einzelheiten dargestellt sind. Der Abstand der Meßschienen, d.h., die von den Meßschienen gebildete Spaltbreite, ist auf die Größe der auszusortierenden Reinigungskörper 5 abgestimmt. Wie aus den Fig. 3 bis 5 erkennbar wird, können die Meßschienen 4 unterschiedlich ausgebildet sein. Die in Fig. 3 dargestellte Form ergibt ein Abscheiden der Reinigungskörper, die durch die Vibrationskräfte über die Meßschienen 4 gefördert werden, indem die Reinigungskörper 5a mit einem Durchmesser, der gleich oder kleiner als die Spaltbreite ist, durch den Spalt hindurch in einen Auffangbehälter 9 fallen, wobei die Reinigungskörper noch an einer Lichtschranke 11' vorbeigleiten, die daraufhin einen Impuls abgibt, der in noch zu beschreibender Weise weiterverarbeitet werden kann.

Reinigungskörper 5b mit einem Durchmesser, der größer ist, als es der Spaltbreite entspricht, fallen erst — gemäß Fig. 3 — hinter den Meßschienen 4 nach unten und gelangen auf diese Weise in einen Auffangbehälter 8, der auch der Dosierbehälter der noch anhand der Fig. 6 und 7 zu beschreibenden Einbringvorrichtung sein kann.

Bei der Ausführungsform der Fig. 4 gelangen durch den kleineren Spalt nur Reinigungskörper 5a mit einem Durchmesser, der gleich oder kleiner als dessen Spaltbreite ist. Reinigungskörper 5b mit einem darüber hinausgehenden Durchmesser, der aber kleiner als der Durchmesser des anschließenden Spaltes größerer Breite ist, gelangen beispielsweise in den Behälter 8, während Reinigungskörper mit noch größerem Durchmesser, die beispielsweise zu einem Verstopfen der zu reinigenden Rohre führen würden, über die Meßschienen hinaus gelangen und in einem dritten, nicht dargestellten Behälter aufgefangen werden könnten.

Die Ausführungsform der Fig. 5 erlaubt bei entsprechender Länge der kontinuierlich divergierenden Meßschienen das Trennen von Reinigungskörpern in ähnlicher Weise wie gemäß den Fig. 3 und 4, wobei jedoch weitere Aussortierung in Gruppen mit verschiedenen Durchmessern möglich wird.

Ähnlich wie für die Gruppe der Reinigungskörper 5a könnten auch für die weiteren Gruppen, insbesondere für die Gruppe 5b, jeweils eine Lichtschranke 11 vorgesehen werden.

Für einen einwandfreien Sortierbetrieb müssen die Reinigungskörper 5 einzeln hintereinander über die Meßschienen geführt werden. Dies erreicht man durch die bereits erwähnte V-förmige Ausbildung des Linearförderers 2 sowie durch eine sich beschleunigende Fördergeschwindigkeit zum Ende des Linearförderers hin.

Vielfach haben die abgeriebenen Reinigungskörper 5a keine Kugelform mehr, sondern beispielsweise Zigarrenform. Die V-Form des Linearförderers bewirkt, daß die Reinigungskörper 5a bezüglich der Meßschienen 4 so ausgerichtet werden, daß sie mit ihrer Längserstreckung in Richtung der Spaltachse zu liegen kommen, so daß auch zigarrenförmig abgeriebene Reinigungskörper sicher abgeschieden werden.

Da die Sortiereinrichtung 10 nur eine begrenzte Menge von Reinigungskörpern 5 aufnehmen kann, ohne daß es zu einer Selbstblockade kommt oder daß die Reinigungskörper die Meßschienen nicht mehr einzeln erreichen, ist der Dosierbehälter 1 vorgeschaltet. Der Boden 3 des Dosierbehälters 1 besteht zu diesem Zweck aus einer oder, wie in der abgebildeten Ausführungsform, mehreren Klappen 3a, die am unteren Behälterrand derart angelenkt sind, daß sie um eine Achse schwenken, die zweckmäßigerweise parallel zur Achse des Linearförderers 2 liegt. Um diese Achsen sind die Klappen 3a mit Hilfe von Antriebseinrichtungen 6, 7 aus der Horizontalen heraus nach unten in den Raum des Linearförderers 2 hinein verschwenkbar, wodurch sich die Rinne unterhalb des Dosierbehälters 1 mit Reinigungskörpern füllt. Durch ein anschließendes erneutes Hochschwenken der Klappen 3a werden die in der Rinne befindlichen Reinigungskörper vom Fülldruck der im Dosierbehälter 1 befindlichen Säule aus Reinigungskörpern befreit und können daher durch die Vibration der Rinne ohne Blockierung voran transportiert werden. Hat sich die Rinne weitgehend geleert, was z.B. mittels weiterer nicht dargestellter Meßanordnungen wie Fotozellen o. dgl. feststellbar ist, werden die Klappen 3a erneut geöffnet. Alternativ können die Klappen 3a auch in regelmäßigen zeitlichen Abständen geöffnet werden, wobei eine Überfüllung des Linearförderers 2 nicht zu befürchten ist, da nur jeweils soviel Reinigungskörper nachfließen, wie vorher durch den Vibrierbetrieb abgeflossen sind.

Da sich Reinigungskörper zwischen den Klappen 3a und den unteren Rändern des Behälters 1 verklemmen können, ist die Antriebseinrichtung 6, die beispielsweise von einem von einem Motor betätigten Exzenter gebildet sein kann, mit einem zwischen dieser Antriebseinrichtung und der Klappe angeordneten Verbindungselement versehen, das in bestimmtem Ausmaß einen Längenausgleich zuläßt, beispielsweise dadurch, daß diese Verbindungseinrichtung elastisch ist. In der Fig. 2 dargestellt sind zu diesem Zweck Schraubenfedern. Alternativ kann auch die Klappe selbst oder deren Ränder nachgiebig sein, z.B. aus Hartgummi bestehen.

Auf diese Weise wird verhindert, daß durch das gewaltsame Einklemmen von Reinigungskörpern zwischen Klappe 3a und unterem Rand des Behälters 1 eine Beschädigung der Reinigungskörper eintreten kann.

In Fig. 6 ist schematisch im Schnitt die Einbringvorrichtung für Reinigungskörper in den Kühlmittelkreislauf dargestellt. Die Einbringvorrichtung besteht aus einem die Reinigungskörper 5 aufnehmenden Behälter 8, der mit dem bezüglich der Fig. 1 dargestellten Behälter 8 identisch sein kann, mit diesem aber auch über eine nicht näher dargestellte Fördereinrichtung in Verbindung stehen kann. Unter diesem Behälter 8 befinden sich zwei Walzen 12, die gegenläufig rotieren, wie durch die Pfeile dargestellt ist. Das Walzenpaar 12 ragt bis in das in einer Schleuse 14 befindliche Kühlmittelfluidum 15 hinein. Die Spaltbreite 16 zwischen den Walzen 12 ist auf den Durchmesser der Reinigungskörper 5 sowie auf deren Porosität abgestimmt. Die Reinigungskörper 5 werden in den Spalt 16 durch die Drehbewegung der Walzen 12 hineingezogen und dabei soweit zusammengepreßt, daß im wesentlichen die gesamte eingeschlossene Luft entweicht. Nach dem Austreten des Reinigungskörpers 5 aus dem Spalt 16 dehnen sich die Reinigungskörper wieder aus und nehmen dabei ihre Ursprungsform wieder an. Dabei saugen sich die Hohlräume im Reinigungskörper mit dem Fluidum 15 voll. Dadurch wird bewirkt, daß die Reinigungskörper annähernd das gleiche spezifische Gewicht annehmen, wie es das Fluidum besitzt, so daß die Reinigungskörper in diesem Fluidum schweben oder zumindest nur langsam sinken oder steigen, je nachdem, welches spezifische Gewicht das Material der Reinigungskörper 5 selbst hat. Bei sehr großem Anteil geschlossener Hohlräume oder geringer Porosität der Reinigungskörper 5 kann es günstig sein, gemäß Fig. 7 ein zweites Walzenpaar 12 dem ersten Walzenpaar nachzuschalten.

Wie aus den Fig. 6 und 7 zu erkennen ist, stützt sich der Behälter 8 mit den daran angebrachten, durch nicht dargestellte Antriebseinrichtungen angetriebenen Walzen 12 über Beine 17 auf dem Flansch 18 des Schleusenrandes der Schleuse 14 ab. Die Anordnung kann selbstverständlich so getroffen werden, daß der Deckel der Schleuse durch diese Einbringvorrichtung, die die Bezugszahl 50 trägt, ersetzt wird, d.h., daß die Vorrichtung 50 so gebaut sein kann, daß sie auch eine Abdichtung der Schleuse bewirkt. Auf die Darstellung näherer Einzelheiten dazu sei jedoch verzichtet. Es kann auch — insbesondere bei großem Durchmesser der Rohre 33, 34 wegen hohen Fluiddurchsatzes — günstig sein, die Einbringvorrichtung 50 in einer Nebenstromleitung anzuordnen, die nur einen Teil von der Vorrichtung 20 zur Vorrichtung 40 fließenden Fluids führt. In Fig. 8 ist schematisch im Querschnitt eine Abzweigvorrichtung 20 dargestellt, mit der Reinigungskörper aus dem Kreislauf herausgezogen werden können. Bei der dargestellten Abzweigvorrichtung, die auch ganz andere Form haben kann, handelt es sich um einen Rohrabschnitt, der über Flanschverbindungen 24 in ein Rohr 31 eingefügt werden kann, das beispielsweise vom Wärmeaustauscher 30 austretende Kühlflüssigkeit mit darin mitgerissenen Reinigungskörpern 5 enthält. Die in Richtung der Pfeile 29 durch den Rohrabschnitt 22 der Abzweigvorrichtung 20 strömende Kühlflüssigkeit 15 trifft auf eine Siebfläche 28, deren Sieböffnungen so gewählt sind, daß die Reinigungskörper 5 auch im abgeriebenen Zustand nicht hindurchtreten können. Die Reinigungskörper sammeln sich vielmehr am unteren Ende der Siebfläche 28, um von dort über einen Stutzen 26 und eine nicht dargestellte Leitung in die in Fig. 1 dargestellte Sortiervorrichtung 10 gebracht zu werden.

In Fig. 9 ist noch einmal schematisch in Blockdiagrammform die Gesamtanordnung der erfindungsgemäßen Reinigungskörperabzugvorrichtung im Zusammenhang mit einem Kühlmittelkreislauf dargestellt, der z.B. einen Wärmetauscher 30, eine Wärmeerzeugungseinrichtung 40, die Reinigungskörpereinbringvorrichtung 50, die Reinigungskörperabzweigvorrichtung 20 sowie diese miteinander verbindende Rohrleitungen 31 bis 34 umfaßt. Außerdem ist in dem Diagramm noch die Sortiervorrichtung 10 als Block dargestellt, die mittels der Abzweigvorrichtung 20 abgezweigte Reinigungskörper zum Zwecke des Sortierens über Leitung 35 aufnimmt. Als zu stark abgerieben aussortierte Reinigungskörper werden über eine Ausschußleitung 36 dem Abfallbehälter 9 zugeführt. Jeder ausgeschiedene Reinigungskörper kann durch eine Sensoreinrichtung 11' erfaßt werden, beispielsweise eine Fotozelle, welche Sensoreinrichtung z.B. die entsprechende Information an einen Vorratsbehälter 60 weiterleitet, der mit Hilfe von nicht näher dargestellten Steuerungseinrichtungen für jeden ausgeschiedenen Reinigungskörper beispielsweise einen neuen Reinigungskörper über ein Rohr 37 in die Einbringvorrichtung 50 einführt, also beispielsweise in den Behälter 8 der Fig. 6.

Reinigungskörper, die von der Sortiervorrichtung 10 für noch ausreichend angesehen werden, werden über Leitung 38 ebenfalls wieder der Einbringvorrichtung 50 zugeführt, also beispielsweise gleichfalls dem Behälter 8 der Fig. 5.

## Ansprüche

1. Vorrichtung zum Abscheiden von abgeriebenen und Einbringen von neuen Reinigungskörpern (5), die aus elastisch verformbarem Material wie Gummi oder Kunststoff bestehen und im Kühlfluidkreislauf eines Wärmetauschers (30) mitgeführt werden, mit einer mit dem Kreislauf verbundenen Abzweig- und Sortiervorrichtung (20, 10) für Reinigungskörper (5a, 5b) mit bestimmter Durchmessergrenze, dadurch gekennzeichnet, daß die Sortiervorrichtung (10) außerhalb des Kühlfluidkreislaufes angeordnet ist und aus einem von der Abzweigvorrichtung (20) über eine Zweigleitung (35) die Reinigungskörper (5) aufnehmenden Dosierbehälter (1) und einer darunter angeordneten Sortiereinrichtung (2) besteht, welche eine im Querschnitt sich nach unten hin verjüngende Trogform hat (z.B. V-, Trapez- oder halbkreisform), mittels Vibrator (2a, 2b) als Linearförderer (2) ausgebildet ist und am Ende zwei mit Abstand angeordnete Meßschienen (4) aufweist, die parallel (Fig. 3), in abgestufter Form parallel (Fig. 4) oder divergierend (Fig. 5) zueinander ausgerichtet sind, und daß eine aussortierte Reinigungskörper (5) erfassende Zähleinrichtung (11) der Sortiereinrichtung (10) nachgeschaltet ist.

2. Vorrichtung nach Anspruch 1, dadurch gekennzeichnet, daß der Boden des Dosierbehälters (1) aus einer oder mehreren am unteren Behälterrand angelenkten Klappen (3) besteht, die durch Antriebseinrichtungen (6, 7) aus der Horizontalen nach unten in den Trog (2) hinein verschwenkbar sind.

3. Vorrichtung nach Anspruch 2, dadurch gekennzeichnet, daß die Antriebseinrichtung (6, 7) einen von einem Motor betätigten Exzenter umfaßt, und daß zwischen Antriebseinrichtung (7) und Klappe (3) ein Verbindungselement vorgesehen ist, das einen Längenausgleich zuläßt, z.B. elastisch ist, insbesondere die Form einer Schraubenfeder aufweist.

4. Vorrichtung nach Anspruch 1, dadurch gekennzeichnet, daß die Zähleinrichtung (11) eine Lichtschranke (11') und ein Zählwerk umfasst.

5. Vorrichtung nach Anspruch 1, wobei die Sortiervorrichtung (10) im Kreislauf über eine Leitung (38) mit einer Einbringvorrichtung (50) für die Reinigungskörper (5) in Verbindung steht, dadurch gekennzeichnet, daß die Einbringvorrichtung (50) eine Anordnung zum Herauspessen der eingeschleusten Luft aus den porösen, elastischen Reinigungskörpern (5) besitzt, die aus einem die Reinigungskörper (5) aufnehmenden Behälter (8) und aus einem oder mehreren darunter angeordneten Paar Walzen (12) besteht.

6. Vorrichtung nach Anspruch 5, dadurch gekennzeichnet, daß die Walzen (12) eines jeden Walzenpaares zueinander gegenläufig rotierend angetrieben sind.

7. Vorrichtung nach einem der Ansprüche 4-6, dadurch gekennzeichnet, daß ein Vorratsbehälter (60) für das Einbringen neuer Reinigungskörper (5) vorgesehen ist, der unter Steuerung der Zähleinrichtung (11) für ausgeschiedene Reinigungskörper (5a) neue Reinigungskörper (5) der Einbringvorrichtung (50) zuführt.

8. Vorrichtung nach einem der Ansprüche 1-7, dadurch gekennzeichnet, daß Abzweigvorrichtung (20) und Einbringvorrichtung (50) als einen fortlaufenden Betrieb zulassende, druckdichte Schleusen ausgebildet sind.

## Claims

1. Apparatus for separating out cleaning members (5) worn by rubbing and introducing replacements therefor, which cleaning members (5) are composed of elastically-deformable material such as rubber or plastics material and are carried along in the cooling fluid circulation of a heat exchanger (30), with branch-off and grading equipment (20, 10) for cleaning members (5a, 5b) with specific limits in diameter, characterised in that the grading equipment (10) is arranged outside the cooling fluid circulation and comprises a quantitatively-supplying receptacle (1) taking in the cleaning members (5) from the branch-off equipment *via* a branch pipe (35) and a grading device (2) arranged below the receptacle (1), said grading device (2) having the shape of a trough converging downwardly in cross-section (e.g. V-, trapezium or semi-circular shape), being developed as a linear conveyor (2) by means of a vibrator, and having at the end two graduated straight edges (4) arranged spaced apart and which are positioned relative to one another parallel (Fig. 3), in stepped formation and parallel (Fig. 4), or divergent (Fig. 5), and in that or counting device (11) detecting separated-out cleaning members (5) is downstream of the grading equipment (10).

2. Apparatus according to claim 1, characterised in that the bottom of the quantitatively-supplying receptacle (1) comprises a flap (3) or a plurality of flaps (3) hinged to the lower edge of the receptacle and which can be swivelled out of the horizontal downwardly into the trough (2) through driving facilities (6, 7).

3. Apparatus according to claim 2, characterised in that the driving facilities (6, 7) comprise an eccentric operated by a motor, and in that there is provided between the driving device (7) and flap (3) a connecting element which permits self-regulation in extension, e.g. is resilient in particular having the form of a helical spring.

4. Apparatus according to claim 1, characterised in that the counting device (11) comprises a photo-electric cell (11') and a counter.

5. Apparatus according to claim 1, wherein the grading equipment (10) is in communication with the circulation *via* a pipeline (38) and equipment (50) for introducing the cleaning members (5), characterised in that the introducing equipment (50) has an arrangement for pressing the entrapped air out of the porous elastic cleaning members (5), which arrangement comprises a receptacle (8) containing the cleaning members (5) and one pair or a plurality of pairs of rollers (12) arranged therebelow.

6. Apparatus according to claim 5, characterised in that the rollers (12) of the or each pair are driven in rotation in contrary senses.

7. Apparatus according to any one of claims 4 to 6, characterised in that there is provided for the introduction of new cleaning members (5) a supply receptacle (60) which supplies under control of the counting device (11) new cleaning members (5) to the introducing equipment (50) in lieu of discarded cleaning members (5a).

8. Apparatus according to any one of claims 1 to 7, characterised in that the branch-off equipment (20) and introducing equipment (50) are in the form of pressurized sluiceways permitting a continuous operation.

## Revendications

1. Dispositif pour éliminer des corps détersifs usés par abrasion et pour introduire des corps détersifs neufs composés d'une matière élastiquement déformable telle que du caoutchouc ou une matière plastique et entraînés dans le circuit de fluide de refroidissement d'un échangeur de chaleur (30), avec un dispositif de dérivation et de triage (20, 10) de corps détersifs (5a, 5b) ayant une limite de diamètre déterminée, relié à ce circuit, caractérisé par le fait que le dispositif de triage (10) est disposé hors du circuit de fluide refroidisseur et se compose d'un récipient doseur (1) qui reçoit les corps détersifs du dispositif de dérivation (20) par l'intermédiaire d'une conduite de dérivation (35), et d'un appareil de triage (2) disposé en dessous, qui a une forme en auge dont la section va en se rétrécissant vers le bas (par exemple une forme en V, trapézoïdale ou semi-circulaire), qui est conçu en tant que transporteur linéaire (2) au moyen d'un vibreur (2a, 2b) et, à son extrémité, comporte deux réglettes de mesure (4) qui, l'une par rapport à l'autre, sont orientées parallèlement (Fig. 3), parallèlement en forme étagée (Fig. 4) ou divergentes (Fig. 5), et par le fait qu'un appareil de comptage (11) captant les corps détersifs éliminés fait suite au dispositif de triage (10).

2. Dispositif selon la revendication 1, caractérisé par le fait que le fond du récipient doseur (1) se compose d'un ou de plusieurs volets (3) articulés au bord inférieur du récipient et que des mécanismes de commande (6, 7) peuvent faire basculer de l'horizontale vers le bas dans l'auge (2).

3. Dispositif selon la revendication 2, caractérisé par le fait que le mécanisme de commande (6, 7) comprend un excentrique actionné par un moteur, et qu'entre le mécanisme de commande (7) et le volet (3) est prévu un élément de liaison qui autorise une compensation de longueur, par exemple par élasticité, présentant notamment la forme d'un ressort hélicoïdal.

4. Dispositif selon la revendication 1, caractérisé par le fait que l'appareil de comptage (11) comprend une barrière lumineuse (11') et un compteur.

5. Dispositif selon la revendication 1, dans lequel le dispositif de triage (10) est relié, par l'intermédiaire d'une conduite (38), à un dispositif d'introduction (50) des corps détersifs (5), caractérisé par le fait que le dispositif d'introduction (50) comporte, pour exprimer des corps détersifs élastiques et poreux (5) l'air inclus, un système composé d'un récipient (8) et d'une ou plusieurs paires de cylindres (12) disposées au-dessous de lui.

6. Dispositif selon la revendication 5, caractérisé par le fait que les cylindres (12) de chaque paire sont commandés en rotation en sens inverses l'un de l'autre.

7. Dispositif selon l'une des revendications 4 à 6, caractérisé par le fait qu'un réservoir (60) pour l'introduction de corps détersifs neufs (5) est prévu et envoie dans le dispositif d'introduction (50), sous l'impulsion de l'appareil de comptage (11) des corps détersifs éliminés (5a), des corps détersifs neufs (5).

8. Dispositif selon l'une des revendications 1 à 7, caractérisé par le fait que le dispositif de dérivation (20) et le dispositif d'introduction (50) sont conçus en tant que sas étanches à la pression et autorisant un fonctionnement en continu.

Fig. 1.

Fig. 2.

**Fig. 3.**

**Fig. 4.**

**Fig. 5.**

# Fig. 6.

# Fig. 7.

**Fig. 8.**

20

24

29

22

5

28

15

26

**Fig. 9.**

31

30

32

35

20
Fig.8,9.

40

10
Fig.1,2.

50
Fig.6,7.

34

33

36

11'

38

37

9

60

4